# EUROPÄISCHE PATENTSCHRIFT

(11) **EP 2 153 170 B1**
(45) Veröffentlichungstag und Bekanntmachung des Hinweises auf die Patenterteilung: **04.12.2013**
(21) Anmeldenummer: 08748998.5
(22) Anmeldetag: 18.04.2008
(51) Int. Cl.: G01C 19/5621

(54) **DREHRATENSENSOR**
ROTARY SPEED SENSOR
CAPTEUR DE VITESSE DE ROTATION

(30) Priorität: 20.04.2007 DE 102007018834
(43) Veröffentlichungstag der Anmeldung: 17.02.2010
(73) Patentinhaber: Conti Temic Microelectronic GmbH, 90411 Nürnberg (DE)
(72) Erfinder: ROSE, Matthias, 85614 Kirchseeon (DE); AIKELE, Matthias, 81673 München (DE); BAUER, Karin, 82041 Oberhaching (DE); SEIDEL, Helmut, 82319 Starnberg (DE)
(74) Vertreter: Rasch, Michael
(86) Internationale Anmeldenummer: PCT/EP2008/003153
(87) Internationale Veröffentlichungsnummer: WO 2008/128728

(56) Entgegenhaltungen:
- WO-A-93/05401
- DE-A1-102005 008 352
- DE-A1-102005 045 378
- DE-A1-102005 045 379

## Beschreibung

Die Erfindung betrifft einen Drehratensensor, häufig auch bezeichnet als Winkelgeschwindigkeitssensor.

Drehratensensoren werden verwendet, um eine Winkelgeschwindigkeit eines Gegenstandes um eine Achse zu ermitteln. Ist der Drehratensensor mikromechanisch aus Sitiziumsubstraten hergestellt, bietet er gegenüber einem feinwerktechnischen Kreisel den Vorzug, dass er in kleinen Abmessungen zu relativ niedrigen Kosten gefertigt werden kann. Vorteilhaft sind ferner eine relativ geringe Messunsicherheit und ein geringer Energieverbrauch während des Betriebes. Ein Hauptanwendungsgebiet von Drehratensensoren liegt in der Automobiltechnik, zum Beispiel bei Fahrdynamikregelungssystemen wie dem elektronischen Stabilitätsprögramm. Eine weitere Anwendung für Drehratensensoren liegt in der sogenannten Rollover-Detektion eines Fahrzeuges im Zusammenhang mit Airbagsteuereinheiten und Rückhaltesystemen für Fahrzeuginsassen.

Ferner werden Drehratensensoren für Navigationszwecke sowie für die Bestimmung der Lage und des Bewegungszustandes von Fahrzeugen aller Art eingesetzt. Andere Einsatzfelder sind zum Beispiel Bildstabilisatoren für Videokameras, Dynamikregelung von Satelliten beim Aussetzen in die Erdumlaufbahn oder Backup-Lageregelungssysteme in der zivilen Luftfahrt. Drehratensensoren finden auch Anwendung im allgemeinen Maschinenbau zum Beispiel bei der Vibrationsmessung. In der Medizintechnik werden Drehratensensoren zum Beispiel beim Monitoring von Patienten durch Messen ihrer Bewegung oder bei der Steuerung von chirurgischen Instrumenten bei der minimalinvasiven Chirurgie eingesetzt.

Im Stand der Technik sind mikromechanisch hergestellte Drehratensensoren bekannt. Sie weisen allgemein einen Oszillator auf, welcher in eine Schwingung versetzt wird. Bewegt sich der Oszillator in einem rotierenden System radial nach innen oder außen, ändert sich seine Bahngeschwindigkeit. Er erfährt somit eine Tangentialbeschleunigung, welche durch die Corioliskraft verursacht wird. Die Reaktion des Oszillators auf die Rotation wird mittels einer Ausleseeinheit detektiert, welche mit dem Oszillator gekoppelt ist.

So wird in DE 195 28 961 C2 ein aus einem Siliziumsubstrat gefertigter Sensor mit einem stimmgabelförmigen Oszillator vorgeschlagen, der zwei Zinken aufweist, die an ihrem jeweiligen Fußpunkt über eine gemeinsame Basis gekoppelt sind. Die Zinken sind jeweils parallel zu einer Wafersubstratoberfläche ausgebildet, wobei der stimmgabelförmig aufgebaute Oszillator mit seiner Basis an einem Torsionsbalken aufgehängt ist. Auf einem Zinken ist eine Aktorschicht aufgebracht, um eine Zinkenbewegung senkrecht zur Substratoberfläche anzuregen. Bei einer Rotation des Aufbaus um eine zur Längsachse der Zinken parallele Achse mit einer Winkelgeschwindigkeit w wirkt durch die Corioliskraft von den Zinken über die Basis auf den Torsionsbalken ein Drehmoment. Gegenphasig schwingende Zinken verursachen somit eine Drehschwingung des Torsionsbalkens. Die Bestimmung der Drehrate des Sensors erfolgt durch eine Messung der im Torsionsbalken induzierten mechanischen Schubspannung. Ein derartiger Sensor mit einer vertikalen Schwingungsrichtung ist in der Herstellung relativ aufwendig, da für jede Zinke des stimmgabelförmigen Oszillators eine einzelne Waferebene benötigt wird. Denn der stimmgabelförmige Oszillator dient dabei als ein Sensormittelteil, an welches ein Basiswafer und ein Deckwafer gebondet sind, so dass eine sich damit ergebende Sensorkavität evakuiert werden kann. Damit sind insgesamt vier Waferebenen erforderlich, was eine aufwendige Fertigung bedeutet.

Aus WO 93/05401 ist ein Drehratensensor bekannt, der in einem rahmenförmigen Aufbau zwei Balken aufweist, die parallel zueinander angeordnet und jeweils in ihren beiden Enden im Rahmen gehalten sind. Die Balken werden quer zu ihrer Längsachse in der Ebene des Aufbaus gegenphasig zu einer lateralen Schwingung angeregt. Bei einer Rotation des Sensors parallel zur Längsachse des Balkens werden aufgrund der Corioliskraft die Balken senkrecht zu ihrer Schwingebene ausgelenkt. Über die Aufhängung der Balken wirkt auf den Rahmen ein Drehmoment, welches eine Torsionsbewegung um eine mittig zu den Balken laufende Drehachse des Rahmens bewirkt. Diese Bewegung wird am äußeren Rand des Rahmens von einer Elektrode kapazitiv erfasst, welche oberhalb oder unterhalb des Rahmens angeordnet ist. Die Abstandsänderung zwischen Rahmen und Elektrode ist gemäß dem Prinzip eines Differentialkondensators ein Maß für die Winkelgeschwindigkeit des Aufbaus. Bei diesem Sensor wird somit eine Schwingung in lateraler Richtung angeregt und eine Vertikalbewegung eines mit dem Balken gekoppelten Rahmens ausgelesen. Das Fertigen und Anbringen von Elektroden oberhalb oder unterhalb der schwingenden Struktur erfordert aufwendige Prozessschritte, so dass ein derartiger Drehratensensor relativ aufwendig zu fertigen ist.

In EP 0 574 143 B1 wird ein aus einem Siliziumwafer gefertigter Drehratensensor vorgeschlagen, der ähnlich wie in DE 195 28 961 C2 zwei parallel zueinander angeordnete Zinken aufweist, die über eine Basis miteinander gekoppelt sind. Die Basis ist über einen Steg mit dem umliegenden Substrat so verbunden, dass ein stimmgabelförmiger Aufbau des Sensors vorliegt. Die Zinken sind als voneinander isolierte, gegenpolige Elektroden ausgebildet, die mittels seitlich von den Zinken abstehenden kammartigen Strukturen ineinander greifen. Die Zinken werden gegenphasig zu einer lateralen Schwingung angeregt, so dass sie im Gegensatz zur DE 195 28 961 C2 nicht senkrecht zur Substratebene, sondern in der Substratebene schwingen. Erfährt dieser Aufbau eine Drehung um eine Achse parallel zur Längsachse einer Zinke, werden die Zinken durch die Corioliskraft senkrecht zur Substratebene ausgelenkt. Über die Zinke und die Basis wirkt auf den Balken ein Drehmoment, dessen Höhe proportional zur Drehgeschwindigkeit ist. Die Anregung der Zinken zu einer lateralen Schwingung erfolgt elektrostatisch. Dazu ist es erforderlich, dass entweder nur die kammartigen Strukturen oder die gesamten Zinken elektrisch leitfähig sind. Werden nur die kammartigen Strukturen berücksichtigt, besteht eine Möglichkeit darin, Metallelektroden in die Seitenwände der kammartigen Strukturen einzubringen. Dies ist aufwendig und hat ferner den Nachteil, dass aufgrund der unterschiedlichen thermischen Ausdehnungskoeffizienten von Silizium und Metall Temperaturdriftphänomene zu erwarten sind. Eine andere Möglichkeit besteht darin, die Zinken aus dotiertem und damit leitfähigem Silizium auszubilden. In diesem Fall ist eine elektrische Isolation der Zinken voneinander erforderlich. Dazu können Trenchgräben erzeugt und anschließend wieder mit elektrisch isolierendem Material aufgefüllt werden, siehe US 5,930,595. Dies ist mit aufwendigen Fertigungsschritten verbunden und kann zudem die Güte des Oszillators verschlechtern.

Bei einem in DE 199 02 339 A1 vorgeschlagenen Drehratensensor werden zwei stimmgabelförmige Oszillatoren verwendet, die in einer Ebene angeordnet sind. Der erste Oszillator, welcher als Anregungsstimmgabel bezeichnet ist, weist zwei parallel zueinander angeordnete Zinken auf, die an einem Ende über eine erste Basis miteinander gekoppelt sind. Die erste Basis ist über einen sich zentral von der Basis parallel zu den Zinken erstreckenden Balken mit einer zur ersten Basis parallelen zweiten Basis verbunden, an deren Enden zwei Zinken parallel zu den Zinken des ersten Oszillators vorgesehen sind, so dass ein zweiter stimmgabelförmiger Oszillator gebildet ist. Jede Zinke des ersten Oszillators wird einzeln in eine Schwingung parallel zur Substratoberfläche angeregt. Erfährt der Aufbau eine Drehung um eine Achse mit einer Komponente, die parallel zu einer Längsachse der Zinken des ersten Oszillators verläuft, so wirkt auf die schwingenden Zinken des ersten Oszillators eine Corioliskraft. Die Zinken werden somit in eine Schwingung senkrecht zur Substratoberfläche versetzt. Auf den mit der ersten Basis gekoppelten Balken wird damit eine Torsionsbeanspruchung ausgeübt, die über die zweite Basis an die daran angekoppelten Zinken des zweiten Oszillators weiter geleitet wird. Die Zinken des zweiten Oszillators werden dadurch zu Schwingungen senkrecht zur Substratebene angeregt, wobei die Schwingung des zweiten Oszillators gegenphasig zur Schwingung des ersten Oszillators ist. Die Schwingung jeder Zinke des zweiten Oszillators, welcher als Auslesestimmgabel bezeichnet ist, wird detektiert und dient als Messsignal zur Bestimmung der Winkelgeschwindigkeit des Substrates.

In DE 10 2005 008352 ist ein Drehratensensor gemäß dem Oberbegriff des unabhängigen Anspruchs offenbart.

Weitere Drehratensensoren aus dem Stand der Technik sind in den Schriften WO 93/05401, DE 10 2005 045378 und DE 10 2005 045379 offenbart.

Nachteilig bei diesen im Stand der Technik vorgeschlagenen Drehratensensoren ist ihre relativ aufwendige Herstellung mit zum Teil mehreren übereinanderliegenden Waferebenen und eine entsprechend aufwendige Ansteuerung.

Es ist daher eine Aufgabe der vorliegenden Erfindung, einen Drehratensensor vorzuschlagen, der einfach aufgebaut und anzusteuern ist.

Diese Aufgabe wird durch einen Drehratensensor mit den Merkmalen des unabhängigen Anspruchs gelöst. In davon abhängigen Ansprüchen sind vorteilhafte Ausgestaltungen der Erfindung angegeben.

Der erfindungsgemäße Drehratensensor umfasst einen stimmgabelförmigen Oszillator mit einem ersten elektrisch leitfähigen Zinken und einem im Abstand dazu angeordneten zweiten elektrisch leitfähigen Zinken, wobei der erste Zinken und der zweite Zinken über eine gemeinsame Basis miteinander verbunden sind. Der Sensor weist ferner einen Steg auf, welcher die Basis mit einem Substrat verbindet, und eine Ausleseeinheit zum Erfassen von Schwingungen des Oszillators. Der Oszillator besitzt ein einheitliches Potential und ist von einer oder mehreren benachbart zu den Zinken angeordneten Anregungselektroden elektrisch isoliert, um eine elektrostatische Anregung zwischen den Zinken und den Anregungselektroden zu ermöglichen.

Im Gegensatz zu Drehratensoren im Stand der Technik müssen somit bei einer elektrostatischen Anregung der erste Zinken und der zweite Zinken nicht elektrisch voneinander isoliert sein, um in eine laterale Schwingung versetzt zu werden. Vielmehr besitzt der gesamte Oszillator einschließlich beider Zinken und der die Zinken verbindenden Basis ein einheitliches Potential. Es ist lediglich eine einzige Isolation zwischen dem Oszillator und einer oder mehreren benachbart zu den Zinken des Oszillators angeordneten Anregungselektroden notwendig. Da diese Isolation aber nicht mehr an den Zinken vorliegen muss, wird die Güte des Oszillators durch die Isolation zum Beispiel in Form eines Trenchgrabens nicht beeinträchtigt. Aufgrund des gemeinsamen Potentials des Oszillators ist auch nur eine Ansteuerleitung für beide Zinken notwendig, so dass die Ansteuerung vereinfacht wird. Ferner ist es möglich, den Drehratensensor nicht in mehreren, sondern nur noch in einer einzigen Waferebene zu realisieren. Die Herstellung und die Ansteuerung des erfindungsgemäßen Drehratensensors ist damit im Vergleich zu Sensoren im Stand der Technik deutlich vereinfacht.

Erfindungsgemäß sind die Anregungselektroden einstückig mit dem Substrat ausgebildet. Wenn das Substrat elektrisch leitfähig ist, eignet es sich gleichzeitig zur Herstellung von Elektroden. Indem das Substrat die Elektroden beinhaltet, kann der Aufbau des Drehratensensors weiter vereinfacht werden.

Erfindungsgemäß greifen die Anregungselektroden kammartig in nicht berührender Weise in die Zinken ein. Damit sind kleine Abstände zwischen den Anregungselektroden und den ihnen gegenüberliegenden Elektrodenflächen der Zinken möglich, so dass mit relativ niedriger Spannung eine ausreichend hohe elektrische Feldstärke erzeugt wird, um den Oszillator in eine laterale Schwingung zu versetzen.

Die kammartig angeordneten Anregungselektroden können parallel zu einer lateralen Schwingungsrichtung der Zinken innerhalb der durch die Zinken definierten Ebene angeordnet sein. So kann fast entlang der gesamten Zinkenlänge eine Wechselwirkung zwischen Anregungselektroden und Zinken erreicht werden, so dass eine sehr genaue Schwingungsanregung möglich ist.

Erfindungsgemäß sind die kammartig angeordneten Anregungselektroden senkrecht zu einer lateralen Schwingungsrichtung der Zinken angeordnet, wobei sie vorzugsweise im Wesentlichen parallel zu den Zinken orientiert sind. Sind die Anregungselektroden dann im Bereich eines Zinkenendes angeordnet, welches der Oszillatorbasis gegenüberliegt, ist ein maximaler Abstand bzw. Hebelarm zur Oszillatorbasis gegeben. Damit kann mit einer relativ geringen Anregungsspannung eine relativ große Auslenküng der Zinken erreicht werden.

Die beiden Alternativen lassen sich auch vorteilhaft kombinieren.

Vorzugsweise ist die Ausleseeinheit am Steg des Drehratensensors vorgesehen. Durch Schwenken des Sensors um eine Achse parallel zur Achse des Steges lenken der erste Zinken und der zweite Zinken des Oszillators aufgrund der Corioliskraft senkrecht zur Richtung der lateralen Zinkenschwingung aus, wodurch der Steg zu einer Torsionsschwingung angeregt wird. Die Amplitude der Torsionsschwingung ist proportional zur Drehrate, mit welcher der Sensor geschwenkt wird. Ist die Ausleseeinheit am Steg vorgesehen, wird zum Beispiel ein zweiter (Auslese-)Oszillator nicht benötigt.

Zur Messung einer solchen Torsionsschwingung des Steges weist die Ausleseeinheit bevorzugt einen Piezowiderstand auf. Ein scherspannungsempfindlicher Piezowiderstand kann an mindestens einer Seite des Steges zwischen der Basis des Oszillators und dem Substrat angebracht sein. Aufgrund einer Torsion des Steges ist es möglich, mit dem Piezowiderstand eine Scherspannung an den Oberflächen des Steges zu detektieren.

Die Ausleseeinheit kann bei einer weiteren Ausgestaltung der Erfindung einen auf dem Steg angeordneten piezoelektrischen Dünnfilm aufweisen. In diesem Fall wird der transversale piezoelektrische Effekt genutzt, indem proportional zu einer Deformation des Dünnfilms durch Zug oder Druck eine Ladung von dem Dünnfilm abgegriffen werden kann. Die Ladungsmenge ist dabei ein Maß für die Verformung an der Oberfläche des Steges, an dem der piezoelektrische Dünnfilm angebracht ist.

Gemäß einer bevorzugten Ausführungsform sind die Abmessungen, Massenverteilungen und Anregungsparameter so aufeinander abgestimmt, dass die Schwingung der Zinken des Oszillators senkrecht zur lateralen Schwingungsrichtung der Zinken eine Resonanzschwingung an dem Steg induziert. Bei einer Resonanzschwingung entstehen relativ hohe Amplituden, so dass an dem Steg mit einer relativ geringen Messunsicherheit ausgelesen werden kann.

Der erfindungsgemäße Drehratensensor ist vorzugsweise mikromechanisch herstellbar. Damit kann ein Sensor erzielt werden, der geringe Abmessungen bei hoher Präzision aufweist.

Weitere Merkmale und Vorteile der Erfindung ergeben sich aus der folgenden Beschreibung verschiedener Ausführungsbeispiele im Zusammenhang mit den begleitenden Zeichnungen. Darin zeigen:
- Fig. 1: eine schematische Darstellung eines Ausführungsbeispiels eines Drehratensensors;
- Fig. 2: eine Schnittdarstellung des Ausführungsbeispiels des Drehratensensors entlang der Linie A-A in Fig. 1; und
- Fig. 3: eine schematische Darstellung einer Ausführungsform des erfindungsgemäßen Drehratensensors.

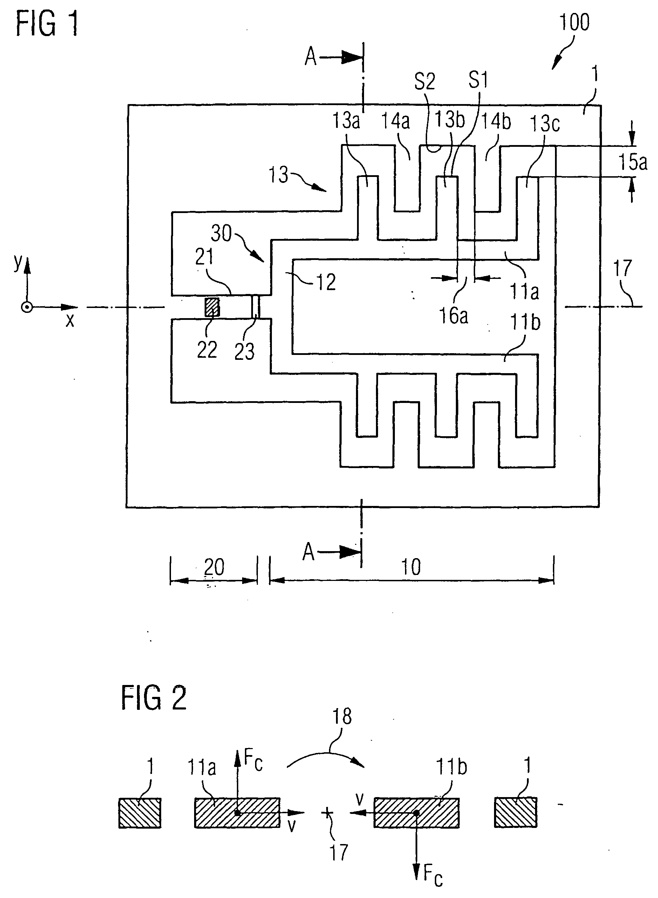

In Fig. 1 ist ein Ausführungsbeispiel eines Drehratensensors 100 mit einem Substrat 1 sowie einer Anregungseinheit 10 und einer Ausleseeinheit 20 dargestellt. Die Anregungseinheit 10 weist einen Oszillator 30 auf, der einen ersten Zinken 11 a und einen zweiten Zinken 11 b umfasst. Der erste Zinken 11 a und der zweite Zinken 11 b sind über eine Basis 12 so miteinander verbunden, dass der Oszillator 30 stimmgabelförmig ausgebildet ist. Die Zinken 11 a und 11 b sind mit Zinkenelektroden 13 versehen, welche bei dem ersten Zinken 11 a mit den Bezugszeichen 13a, 13b und 13c bezeichnet sind. Sie sind senkrecht zur Längsrichtung der Zinken 11 a, 11 b angeordnet und stehen seitlich von diesen Zinken ab. Der Drehratensensor ist derart ausgebildet, dass die Zinkenelektroden 13 kammartig zwischen kammartig angeordnete Anregungselektroden 14 in nicht berührender Weise eingreifen. Aus Fig. 1 ist ersichtlich, dass zum Beispiel die Zinkenelektrode 13b zwischen die Anregungselektroden 14a und 14b eingreift.

Bei dem in Fig. 1 dargestellten Ausführungsbeispiel ist das Substrat 1 durch Dotieren elektrisch leitfähig ausgebildet. Die Anregungselektroden 14a und 14b können somit einstückig mit dem Substrat geformt werden, ohne dass zusätzliche Metallelektroden auf das Substrat aufgebracht werden müssen. Um die Zinken 11 a und 11 b in eine laterale Schwingung zu versetzen, werden sie elektrostatisch angeregt. Dies lässt sich dadurch erreichen, dass zum Beispiel an die Anregungselektroden 14 eine Gleichspannung und an die Zinkenelektroden 13 eine Wechselspannung angelegt wird oder umgekehrt. Um einen Kurzschluss zwischen den Anregungselektroden 14 und den Zinkenelektroden 13 zu verhindern, muss eine elektrische Isolation vorgesehen sein. Dies wird hier durch einen mit einem elektrisch nicht leitfähigen Material ausgefüllten Graben 23 erreicht, der im Steg 21 vorgesehen ist. Durch die angelegten Spannungen zwischen den Zinkenelektroden 13 und den Anregungselektroden 14 bildet sich zwischen beiden Elektroden 13, 14 ein elektrisches Feld aus, welches in Abhängigkeit von der angelegten Wechselspannung alterniert. Bei gleicher Polarität stoßen sich die Elektroden 13, 14 voneinander ab, während sie sich bei entgegengesetzter Polarität aufeinander zubewegen. Da die mit dem Substrat 1 einstückig ausgebildeten Anregungselektroden 14 in einem steifen Rahmen angeordnet sind, lenken sie bei den alternierenden elektrischen Feldern nur relativ wenig aus. Hingegen können die Zinken 11 a, 11 b aufgrund des stimmgabelförmigen Aufbaus des Oszillators 30 relativ leicht auslenken und schwingen bei der angelegten Wechselspannung lateral zu den Anregungselektroden 14 hin und von diesen wieder zurück.

In der Ruhelage sind die Zinken 11a und 11 b nicht ausgelenkt. Es ist vorteilhaft, wenn die Zinkenelektroden 13 dann so positioniert sind, dass möglichst gleichmäßige Abstände zu den Anregungselektroden 14 bestehen. Zwischen einer Stirnseite S1 der Zinkenelektrode 13b des ersten Zinkens 11a und einer Stirnseite S2 zwischen den Anregungselektroden 14a und 14b besteht ein in y-Richtung orientierter Abstand 15a. Bei einer lateral nach außen gerichteten Schwingung des ersten Zinkens 11 a verringert sich dieser Abstand 15a, während er sich bei einer nach innen in Richtung zur Sensormittelachse 17 hin orientierten Schwingung vergrößert. Die Schwingung gelingt um so besser, wenn in der Ruhelage der Abstand in x-Richtung zwischen zum Beispiel der Zinkenelektrode 13b und der benachbarten Anregungselektrode 14b, in Fig. 1 mit 16a bezeichnet, gleich dem Abstand zwischen der Zinkenelektrode 13b und der gegenüberliegenden benachbarten Anregungselektrode 14a ist. In diesem Fall wird die Zinkenelektrode 13b zwischen zwei die gleiche elektrische Polarität aufweisende Anregungselektroden 14a und 14b geführt und in ihrer Bewegung stabilisiert. Durch einen möglichst symmetrischen Aufbau des Oszillators 30 wird eine hohe Schwingungsgüte erreicht.

Die Basis 12, welche den ersten Zinken 11a und den zweiten Zinken 11 b miteinander verbindet, ist mittels eines Steges 21 mit dem Substrat 1 gekoppelt. Der Steg 21 wirkt als Aufhängung für den stimmgabelförmigen Anregungsoszillator 30. Schwingen die Zinken 11 a und 11 b gegenphasig zueinander und wird gleichzeitig der gesamte Sensor 100 um eine Achse gedreht, welche parallel zum Steg 21 verläuft, wirkt auf die schwingenden Zinken 11a und 11 b eine Corioliskraft senkrecht zur Zinkenebene. In Figur 2 ist eine Schnittdarstellung des Drehratensensors 100 entlang der Linie A-A in Figur 1 gezeigt. Die Zinke 11a schwingt mit einer Geschwindigkeit v in Richtung zur Mittelachse 17 als Drehachse parallel zur Ebene des Substrates 1. Die Zinke 11b schwingt mit einer entgegengesetzt gerichteten Geschwindigkeit v in Richtung zur Mittelachse 17 ebenfalls parallel zur Ebene des Substrates 1. Bei der in Figur 2 dargestellten Anordnung wirkt auf die Zinke 11a eine Corioliskraft F_{C} senkrecht zur Zinkenebene in Richtung nach oben, während auf die Zinke 11 b eine Corioliskraft F_{C} senkrecht zur Zinkenebene in Richtung nach unten wirkt. Aufgrund der auf jede Zinke 11a und 11 b wirkende Corioliskraft F_{C} werden die Zinken um die Mittelachse 17 geschwenkt, siehe Pfeil 18 in Figur 2.

Die Verhältnisse kehren sich um, wenn die Zinken 11 a und 11 b jeweils in eine entgegengesetzte Richtung schwingen. Bewegen sich die Zinken voneinander fort, sind die Kräfte F_{C} in die entgegengesetzten Richtungen orientiert, so dass die Zinke 11a senkrecht zur Zinkenebene nach unten und die Zinke 11 b senkrecht zur Zinkenebene nach oben bewegt werden. Damit ergibt sich ein Schwenken entgegen dem Uhrzeigersinn. Diese Schwenkbewegung wird von den Zinken über die Basis 12 auf den Steg 21 übertragen, so dass auch in diesem Fall der Steg 21 tordiert wird. Die Amplitude der Torsion ist proportional zur Corioliskraft F_{C} und proportional zu der zu messenden Drehrate.

Um die Amplitude der Torsionsschwingung zu bestimmen, wird die Torsionsbewegung direkt am Steg 21 erfasst. Dazu kann auf einer Seitenfläche des Steges 21 ein Auslesemittel in Form eines Piezowiderstandes 22 angebracht werden. Alternativ ist auch ein piezoelektrischer Dünnfilm möglich. Das Prinzip der Detektion der Torsion besteht darin, dass das Piezomaterial bei der Torsion eine Längenzunahme oder eine Längenabnahme erfährt, so dass an den Enden des Piezomaterials entsprechende Ladungsänderungen abgegriffen werden können, deren Betrag einen Rückschluss auf die erfolgte Torsion zulässt. Vorteilhaft bei diesem Aufbau ist, dass keine Gegenelektroden oberhalb oder unterhalb der schwingenden Zinken 11a, 11 b erforderlich sind, um gemäß dem Prinzip des Differentialkondensators ein Maß für die Drehrate zu ermitteln. Bei einem Aufbau gemäß diesem Ausführungsbeispiel kann in einer einzigen Waferebene eine schwingfähige Struktur einfach hergestellt werden und auch in einer einzigen Waferebene ausgelesen werden. Wird der Oszillator 30 um eine Achse parallel zur Mittelachse 17 geschwenkt, so induziert die Corioliskraft eine Torsion des Steges 21 mit der Frequenz der Zinkenmode. Der Sensor 100 kann so dimensioniert sein, dass die Frequenz der Torsionsmode annähernd auf die Frequenz der Zinkenmode abgestimmt ist. In einem solchen Fall lässt sich eine Resonanzüberhöhung auf dem Steg 21 anregen, so dass das Auslesemittel 22 ein mechanisch verstärktes Signal erfassen kann und die Messunsicherheit geringer ist als bei kleineren Amplituden.

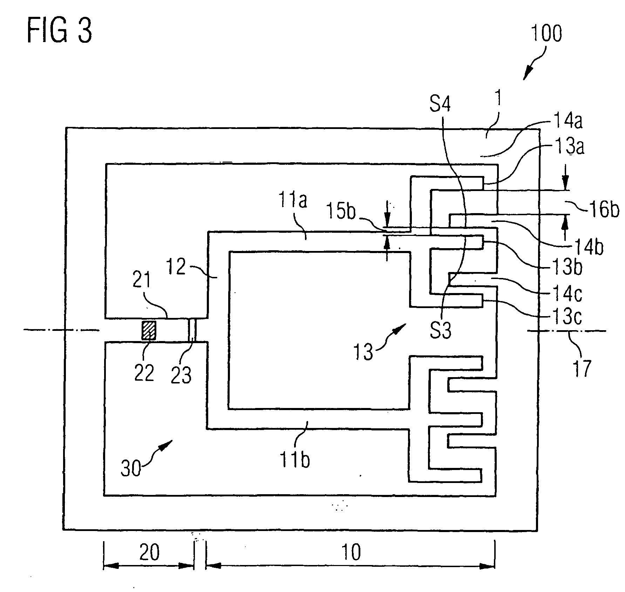

In Fig. 3 ist eine Ausführungsform der Erfindung dargestellt. Sie unterscheidet sich von dem in Fig.1 dargestellten Ausführungsbeispiel dadurch, dass sowohl die Zinkenelektroden 13 als auch die Anregungselektroden 14 entlang der Längsrichtung der Zinken 11 a, 11 b und nicht mehr senkrecht dazu orientiert sind. Eine elektrostatische Anregung der Zinken 11 a, und 11 b erfolgt wie bei der ersten Ausführungsform, indem an eine der Elektroden eine alternierende Spannung angelegt wird. Bei der in Fig. 3 dargestellten Ausführungsform ist in der Ruhelage des Oszillators 30 der Abstand 15b zwischen der Zinkenelektrode 13b des ersten Zinkens 11a und der dazu benachbarten Anregungselektrode 14b kleiner als der Abstand 16b zwischen der Zinkenelektrode 13a und der Anregungselektrode 14b. Ist die Polarität der Zinkenelektrode 13b gleich der Polarität der Anregungselektrode 14b, stößt sich die Zinkenelektrode 13b mit ihrer Seitenfläche S3 von der Anregungselektrode 14b und ihrer Seitenfläche S4 ab. Damit wird eine laterale Schwingung des ersten Zinkens 11a in Richtung zur Mittelachse 17 angeregt. Die Schwingungsanregung erfolgt analog beim zweiten Zinken 11 b, so dass eine gegenphasige Schwingung erzeugt wird. Anstatt einer Wechselspannung, welche an eine Elektrode angelegt wird, kann jede beliebige Spannungsform vorgesehen werden, mit der ein Abstoßen der Elektroden 13, 14 voneinander oder ein Anziehen zueinander erreicht wird. Bei diesen alternativen Spannungsformen kann zum Beispiel eine Dreiecksform oder Rechtecksform verwendet werden.

Die in den Fig. 1 und 3 dargestellten Abstände zwischen den Elektroden sind nicht maßstäblich und nur beispielhaft zu verstehen.

## Patentansprüche

1. Drehratensensor (100), umfassend,
- einen stimmgabelförmigen Oszillator (30) mit einem ersten elektrisch leitfähigen Zinken (11a) und einem im Abstand dazu angeordneten zweiten elektrisch leitfähigen Zinken (11 b), die über eine gemeinsame Basis (12) miteinander verbunden sind,
- einen Steg (21), welcher die Basis (12) mit einem elektrisch leitfähigen Substrat (1) verbindet, und
- eine Ausleseeinheit (20) zum Erfassen von Schwingungen des Oszillators (30),
wobei der Oszillator (30) ein einheitliches Potential besitzt und von einer oder mehreren benachbart zu den Zinken (11a, 11b) angeordneten Anregungselektroden (14) elektrisch isoliert ist, um eine elektrostatische Anregung zwischen den Zinken (11a, 11b) und den Anregungselektroden (14) zu ermöglichen, wobei die Anregungselektroden kammartig in nicht berührender Weise in die Zinken (11a, 11b) eingreifen,
**dadurch gekennzeichnet, dass** die Anregungselektroden (14) einstückig mit dem Substrat (1) ausgebildet sind, und die Anregungselektroden (14) quer zu einer lateralen Schwingungsrichtung der Zinken (11a, 11 b) im Bereich eines Zinkenendes innerhalb der durch die Zinken (11a, 11b) definierten Ebene angeordnet sind.

2. Drehratensensor (100) nach Anspruch 1, **dadurch gekennzeichnet, dass** die Ausleseeinheit (20) am Steg (21) des Drehratensensors (100) vorgesehen ist.

3. Drehratensensor (100) nach Anspruch 2, **dadurch gekennzeichnet, dass** die Ausleseeinheit (20) zur Messung einer Torsion des Steges (21) einen Piezowiderstand aufweist.

4. Drehratensensor (100) nach Anspruch 2, **dadurch gekennzeichnet, dass** die Ausleseeinheit (20) zur Messung einer Torsion des Steges (12) einen piezoelektrischen Dünnfilm aufweist.

5. Drehratensensor (100) nach einem der Ansprüche 1 bis 4, **dadurch gekennzeichnet, dass** die Schwingung der Zinken (11a, 11b) des Oszillators (30) senkrecht zur lateralen Schwingungsrichtung der Zinken (11a, 11b) eine Resonanzschwingung am Steg (21) induziert.

6. Drehratensensor (100) nach einem der Ansprüche 1 bis 5, **dadurch gekennzeichnet, dass** der Drehratensensor (100) mikromechanisch hergestellt ist.

## Claims

1. A rotation speed sensor (100) comprising
- a tuning fork-shaped oscillator (30) with a first electrically conductive projection (11a) and a second electrically conductive projection (11b) arranged spaced apart therefrom, which projections are connected to one another by a common base (12),
- a web (21) which connects the base (12) to an electrically conductive substrate (1) and
- a readout device (20) for recording oscillations from the oscillator (30),
wherein the oscillator (30) has a uniform potential and is electrically insulated from one or a plurality of excitation electrodes (14) arranged adjacent to the projections (11a, 11b), in order to facilitate electrostatic excitation between the projections (lla, 11b) and the excitation electrodes (14), wherein the excitation electrodes engage in a comb-like manner with the projections (11a, 11b) in a non-contact manner,
**characterized in that** the excitation electrodes (14) are formed integrally with the substrate (1) and the excitation electrodes (14) are arranged transversely to a lateral oscillation direction of the projections (11a, 11b) in the region of a projection end within the plane defined by the projections (11a, 11b).

2. The rotation speed sensor (100) according to claim 1, **characterized in that** the readout unit (20) is provided at the web (21) of the rotation speed sensor (100).

3. The rotation speed sensor (100) according to claim 2, **characterized in that** the readout unit (20) for measuring the torsion of the web (21) exhibits a piezoresistor.

4. The rotation speed sensor (100) according to claim 2, **characterized in that** the readout unit (20) for measuring the torsion of the web (21) exhibits a piezoelectric thin film.

5. The rotation speed sensor (100) according to one of the claims 1 to 4, **characterized in that** the oscillation of the projections (11a, 11b) of the oscillator (30) induces a resonance oscillation at the web (21) perpendicular to the lateral oscillation direction of the projections (11a, 11b).

6. The rotation speed sensor (100) according to one of the claims 1 to 5, **characterized in that** the rotation speed sensor (100) is produced micromechanically.

## Revendications

1. Capteur de vitesse de rotation (100) comprenant
- un oscillateur (30) en forme de diapason, avec une première dent (11a) conductrice d'électricité et avec, disposée à une distance par rapport à cette dernière, une deuxième dent (11b) conductrice d'électricité qui sont reliées l'une à l'autre par l'intermédiaire d'une base (12) commune,
- une barrette (21) qui relie la base (12) avec un substrat (1) conducteur d'électricité et
- une unité de lecture (20) pour détecter des oscillations de l'oscillateur (30),
l'oscillateur (30) faisant preuve d' un potentiel homogène et étant électriquement isolé par rapport à une ou à plusieurs électrodes d'excitation (14) placées au voisinage des dents (11a, 11b), pour permettre une excitation électrostatique entre les dents (11a, 11b) et les électrodes d'excitation (14), les électrodes d'excitation s'engageant comme un peigne, de manière sans contact dans les dents (11a, 11b),
**caractérisé en ce que** les électrodes d'excitation (14) sont conçues en monobloc avec le substrat (1) et **en ce que** les électrodes d'excitation (14) sont placées à la transversale d'une direction latérale d'oscillation des dents (11a, 11b), dans la zone d'une extrémité des dents, à l'intérieur du plan défini par les dents (11a, 11b).

2. Capteur de vitesse de rotation (100) selon la revendication 1, **caractérisé en ce que** l'unité de lecture (20) est prévue sur la barrette (21) du capteur de vitesse de rotation (100).

3. Capteur de vitesse de rotation (100) selon la revendication 2, **caractérisée en ce que** pour mesurer une torsion de la barrette (21), l'unité de lecture (20) comporte une résistance piézoélectrique.

4. Capteur de vitesse de rotation (100) selon la revendication 2, **caractérisé en ce que** pour mesurer une torsion de la barrette (21), l'unité de lecture (20) comporte un film mince piézoélectrique.

5. Capteur de vitesse de rotation (100) selon l'une quelconque des revendications 1 à 4, **caractérisé en ce que** l'oscillation des dents (11a, 11b) de l'oscillateur (30) induit une oscillation de résonance sur la barrette (21), à la perpendiculaire de la direction latérale d'oscillation des dents (11a, 11b).

6. Capteur de vitesse de rotation (100) selon l'une quelconque des revendications 1 à 5, **caractérisé en ce que** le capteur de vitesse de rotation (100) est fabriqué par procédé micromécanique.
